# EUROPÄISCHE PATENTSCHRIFT

(11) **EP 3 045 477 B1**
(45) Veröffentlichungstag und Bekanntmachung des Hinweises auf die Patenterteilung: **09.06.2021**
(21) Anmeldenummer: 15000101.4
(22) Anmeldetag: 16.01.2015
(51) Int. Cl.: C08F 2/50, C09D 11/101

(54) **Verfahren zur Verringerung der Migration von Photoinitiatoren und deren Abbauprodukten in UV-gehärteten Beschichtungen**
Method for reducing the migration of photoinitiators and their degradation products in UV curable coatings
Procédé de réduction de la migration de photo-initiateurs et leur produits de dégradation dans des revêtements durcissant aux rayons UV

(43) Veröffentlichungstag der Anmeldung: 20.07.2016
(73) Patentinhaber: IOT - Innovative Oberflächentechnologien GmbH, 04318 Leipzig (DE)
(72) Erfinder: Mehnert, Reiner, 04416 Markkleeberg (DE); Riedel, Carsten, 04416 Markkleeberg (DE); Schubert, Rolf, 04155 Leipzig (DE); Riedel, Thomas, 04416 Markkleeberg (DE); Rudzik, Frank, 04155 Leipzig (DE)
(74) Vertreter: Köhler, Tobias

(56) Entgegenhaltungen:
- WO-A1-2012/175525
- US-B1- 6 550 905

## Beschreibung

Die Erfindung betrifft ein Verfahren zur Verringerung der Konzentration von Migrationsprodukten aus Photoinitiatoren und deren Abbauprodukten in Acrylatbasierenden, UV-gehärteten Drucken und Beschichtungen durch Bestrahlung mit neuartigen (UVC-enhanced-) Hg-Mitteldruckstrahlern, die eine stark erhöhte Emissionsintensität bel Wellenlängen < 230 nm aufweisen. Die Bestrahlung erfolgt unter Inertgas bei Sauerstoffkonzentrationen < 2000 ppm.

In der Verordnung (EG) 1935/2004 über "Materialien und Gegenstände, die dazu bestimmt sind, mit Lebensmitteln in Berührung zu kommen ..." wird festgelegt, dass "diese Materialien und Gegenstände ausreichend inert sein müssen," (so dass vermieden wird) "dass Stoffe In Mengen, die genügen, um die menschliche Gesundheit zu gefährden ... in Lebensmittel übergehen" .

Weitere rechtliche Grundlagen zur Bewertung des Übergangs von Stoffen in Lebensmittel sind in der "Verordnung (EU) 10/2011 über Materialien und Gegenstände aus Kunststoff, die dazu bestimmt sind, mit Lebensmitteln in Berührung zu kommen" sowie in der (Swiss) "Ordinance on Materials and Articles in Contact with Food SR 817.023.21 of 23 November 2005" festgelegt.

Die Verordnung EU 10/2011 legt außerdem fest, dass "bedruckte und beschichtete Materialien ... aus Kunststoff" In den "Anwendungsbereich der Verordnung" fallen sollten. Die Umsetzung dieser Regelung liegt jedoch in nationaler Verantwortung.

Die European Printing Ink Association (EuPIA) folgt dieser Empfehlung und schlägt als spezifisches Migrationslimit (SML) für unbewertete Migrationsprodukte aus vernetzten Druckfarben und-lacken einen Grenzwert von 10 ppb vor, der ab Dezember 2015 als verbindlich gelten soll.

Siehe: EuPIA-Leitlinie Druckfarben zur Verwendung auf der vom Lebensmittel abgewandten Oberfläche von Lebensmittelverpackungen und Gegenständen, November 2011, Korrigendum Juli 2012 .

Niedermolekulare Bestandteile (Molekulargewicht < 1000 Da) aus UV-vernetzten Druckfarben und Beschichtungen wie Monomere, nicht im Härtungsprozess umgesetzte Photoinitiatoren, Abbauprodukte von Photoinitiatoren, Stabilisatoren, Radikalfänger, niedermolekulare Additive, unvernetzbare Verunreinigungen in Monomeren etc. können entweder durch die "Kunststoffbarriere" in das Lebensmittel diffundieren oder als "Abklatsch" aus einem Stapel oder einer Rolle in das Lebensmittel gelangen.

Den Übergang von Substanzen In das Füllgut Lebensmittel bezeichnet man als Migration. Substanzen, die in einem vorgegebenen Zeitraum in das Füllgut migrieren, bezeichnet man als migrationsfähig. Der spezifische Migrationswert (SML) ist die höchstzulässige Menge eines Stoffes (in mg oder µg Stoff pro kg Lebensmittel), der in das Lebensmittel übergehen darf.

Die Einhaltung bzw. Unterschreitung des spezifischen Migrationslimits von 10 ppb (10 µg/kg Lebensmittel) für UV-Drucke und Beschichtungen stellt im Allgemeinen eine schwierig zu realisierende technische Herausforderung dar. Wenn die UV-Härtung durch Radikale, die durch UV-Bestrahlung aus Photoinitiatoren entstehen, ausgelöst wird, sind in den so gehärteten Beschichtungen als Migrationsprodukte stets nicht umgesetzte Photoinitiatoren und niedermolekulare Abbauprodukte von Photoinitiatoren nachweisbar.

Diese Anteile werden durch dem Stand der Technik entsprechende Maßnahmen wie Bestrahlung mit ausreichend hohen UV-Dosen und Verringerung der Photoinitiator-Konzentration bei Härtung in weitgehend sauerstoffreier Stickstoff- Atmosphäre zwar verringert, sind jedoch im Allgemeinen mit analytischen Standardmethoden wie Gaschromatographie mit Massenspektroskopie-Kopplung (GCMS), Hochdruckchromatographie mit UV/VIS- Detektion (UV/VIS HPLC), Liquidchromatograpie (LC-MS) etc. gut nachweisbar.

Kann man bei der UV-Härtung auf Photoinitiatoren verzichten oder deren Konzentration drastisch reduzieren, dann sind minimale Migrationswerte erreichbar, die denen von Elektronenstrahl (ES)I-gehärteten Beschichtungen entsprechen.

Aufgabe der Erfindung ist es, ein Verfahren vorzuschlagen, mittels welchem die bekannten Nachtelle des Standes der Technik behoben werden und mittels welchem die Anforderungen der geltenden gesetzlichen Regelungen einzuhalten sind.

Überraschend wurde gefunden, dass bei einem Bestrahlungsverfahren von UVhärtbaren, acrylatbasierenden Druckfarben und Beschichtungen unter inerter Atmosphäre unter Verwendung von (UVC-enhanced-) Hg-Mitteldruckstrahlern die Konzentration von im Polymer verbleibenden, migrierbaren Photoinitiator-Molekülen und Photoinitiator- Abbauprodukten im Massenbereich < 1000 Da stark reduziert wird bzw. diese Komponenten dann nicht mehr nachweisbar sind.

Das trifft Insbesondere auf sogenannte Norrish Typ I Photoinitiatoren zu, die ein Radikalpaar über den Zerfall eines intermediären, angeregten Triplet-Zustands bilden. Ausgelöst wird dieser Effekt durch die Verwendung von UV-Strahlern, die gegenüber herkömmlichen Strahlern eine typisch 5-fach höhere Emissionsintensität bei Wellenlängen zwischen 190 und 230 nm aufweisen Die Intensitätserhöhung wird durch eine geeignete Kombination von Metalldotierung und optimierten elektrischen Entladungsbedingungen herkömmlicher Hg-Mitteldruckstrahler erreicht.

Ein Vergleich mit Elektronenstrahl-gehärteten Druckfarben und Lacken zeigt, dass die mit dem erfindungsgemäßen Verfahren (hier als UVC-enhanced-Härtung bezeichnet) hergestellten Muster bei ausreichender UV-Dosis keine Rest-Photolnitiatoren und aus Photoinitiatoren erzeugte Migrationsprodukte aufweisen und die verbleibende Konzentrationen von Migrationsprodukten aus Restmonomeren, Stabilisatoren und niedermolekularen Verunreinigungen der Rohmaterialien etc. für Elektronenstrahl- und UV-enhanced-Härtung vergleichbar sind.

Mit dem erfindungsgemäßen Verfahren der UVC-enhanced-Härtung lassen sich sowohl die Anzahl als auch die Konzentrationen migrierender Komponenten aus Photoinitiatoren beträchtlich verringern.
Das mit dem erfindungsgemäßen Verfahren erzielte Ergebnis trägt dazu bei, die gesetzlichen Vorgaben für einen kontrollierbaren und minimierten Stoffübergang in Lebensmittel zu erfüllen.

Bei der dem Stand der Technik entsprechenden UV-Härtung von Acrylaten (hier als konventionelle UV-Härtung bezeichnet) werden die von Hg-Mitteldruck-Strahlern emittierten Photonen ausschließlich von Photoinitiator-Molekülen absorbiert. Im Allgemeinen wird ein angeregter Triplet- Zustand des Moleküls erzeugt, der entweder durch unimolekularen Zerfall (Norrish Typ I) oder durch H-Abstraktion von einem Nachbarmolekül ein Radikalpaar bildet. Einige oft verwendete Norrish Typ I Photoinitiatoren sind z.B. in Tabelle 1 aufgeführt. Radikaltypen und häufig nachgewiesene Photoinitiatorprodukte sind ebenfalls angegeben.

**Tabelle 1**

| Photoinitiator chemische Klasse Handelsname | Radikal 1 | Radikal 2 | PhotoinitiatorProdukte nach konventioneller UV-Härtung von Acrylaten unter Stickstoff | PhotoinitiatorProdukte nach UVC-enhanced-Härtung von Acrylaten unter Stickstoff |
|---|---|---|---|---|
| 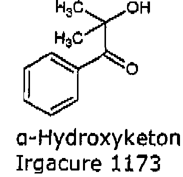 | 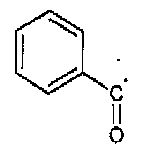 | 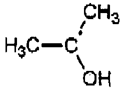 | Benzaldehyd | keine mit spezifischer Migration > 10 ppb |
| 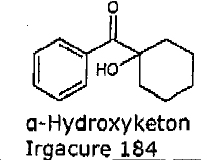 | 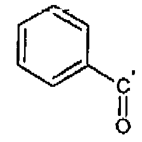 | 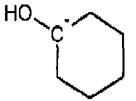 | Benzaldehyd | keine mit spezifischer Migration > 10 ppb |
| 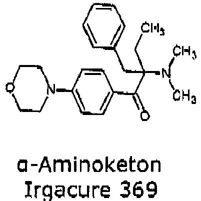 | 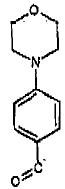 | 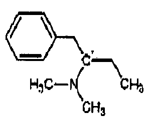 | 1-Phenyl-2-butanon 1,3-Dimethylbenzen 4-Morpholino-4-yl-Benzaldehyd | keine mit spezifischer Migration > 10 ppb |
| 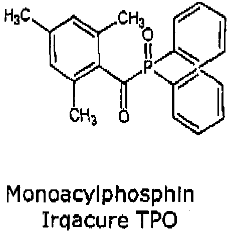 | 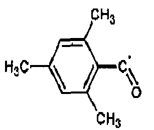 | 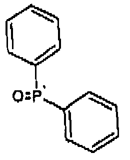 | Trimethylbenzaldehyd Trimethylbenzo e-säure | keine mit spezifischer Migration > 10 ppb, *Trimethylbenzoesäure nachweisbar bei UVC- enhanced-Härtung an Luft* |

Die als Radikal 1 bezeichneten Benzoyltyp-Radikale reagieren mit der Acrylat-Doppelbindung um ein bis zwei Größenordnungen langsamer als die entsprechenden Partnerradikale 2. Es ist deshalb verständlich, dass vorzugsweise Produkte dieser Radikale wie z.B. Benzaldehyde als migrlerbare Hauptkomponenten nachgewiesen werden. Bei der konventionellen UV-Härtung werden selbst bei Härtung unter Stickstoff Photoinitiator-Konzentrationen von 1 bis 2 % verwendet. Ein Teil dieser Moleküle wird durch Rekombination des Radikalpaares zurückgebildet und ist ebenfalls als migrierbares Produkt nachweisbar.

Da Acrylate Im Wellenlängenbereich unterhalb 230 nm eine optische Absorption aufweisen, wird bei UVC-enhanced-Bestrahlung auch das Acrylatmolekül direkt angeregt. Das angeregte Acrylatmolekül bildet ebenfalls ein Radikalpaar, das die Polymerisation startet (EP 00002198981 A1: Method and apparatus for direct radiation-induced polymerisation and cross-linking of acrylates and methacrylates)

Durch die Zugabe von Photoinitiatoren mit typischen Konzentrationen von 0,1 bis 0,5 Gew.% kann die Absorption der Photonen so gesteuert werden, dass sowohl Radikale direkt aus dem Acrylat als auch aus dem Photoinitiator entstehen. Damit sind bis zu vier Radikale am Start der Polymerisation beteiligt. Als Resultat steigt die Brutto-Polymerisations-Geschwindigkeit. Gleichzeitig werden durch Photonen mit Wellenlängen unterhalb 230 nm sowohl Rekombinationsprodukte als auch Photoinitiator-Abbauprodukte in einer Sekundärreaktion angeregt.

Wie für die in Tabelle 1 aufgeführten Abbauprodukte des Photoinitiators IC 369 (α-Aminoketon) durch quantenchemische Rechnungen belegt wird (S. Naumov, Lelbnizinstitut für Oberflächenmodifizierung Leipzig, unveröffentlichte Resultate), entsteht durch Anregung bei Wellenlängen < 230 mm für jedes der angegebenen Produkte ein angeregter Triplet-Zustand, dessen Zerfall zu einem Radikalpaar energetisch möglich ist. Wenn diese Radikale an eine benachbarte Acrylat-Doppelbindung addieren können, werden sie fixiert und verschwinden aus dem Molekulargewichtsbereich < 1000 Da für migrierbare Substanzen. Es ist anzunehmen, dass dieser Mechanismus allgemein gilt, wie die in den folgenden Beispielen dargestellten Ergebnisse zeigen.

Die erfindungsgemäße Lösung wird anhand der folgenden Beispiele erläutert und mit dem Stand der Technik verglichen.

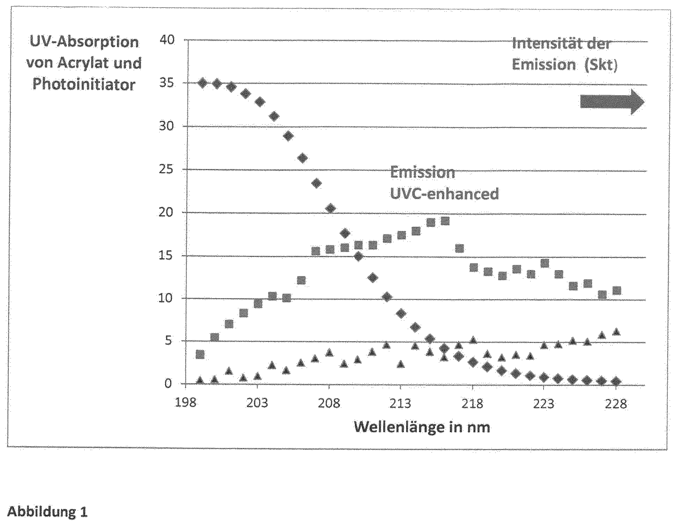

**Beispiel 1** Emission eines UVC-enhanced-Hg-Mltteidruckstrahlers im Vergleich zu einem konventionellen Hg-Mitteldruckstrahler. Effizienz der optischen Anregung von Acrylaten und Photoinitiatoren durch UVC-enhanced-Hg-Mitteldruckstrahler In Abbildung 1 sind Messwerte der optische Absorption eines Acrylats (oben) und der Emission eines konventionelle UV-Strahlers (unten) sowie eines UVC-enhanced-Strahlers (Mitte) gleicher elektrischer Leistung verglichen. Der Strahler wurde mit Wismut dotiert. Die elektrische Spannung wurde mit 12 V pro cm Leuchtlänge so eingestellt, dass eine Erhöhung der Emission und eine Verschiebung der Emission zu Wellenlängen < 210 nm erreicht wurde.

Nimmt man das Summenprodukt=Summe (Emission am Punkt 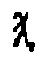 mal Absorption am Punkt 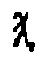 ) als Maß für die Effizienz der Anregung, dann erhält man den Wert 842 für den konventionellen Strahler und 4356 für den UVC-enhanced-Strahler. Die Effizienz der Anregung eines Acrylates durch einen UVC-enhanced-Strahler ist demnach um den Faktor 5,17 höher als bei konventioneller UV-Härtung.

**Beispiel 2:** Migrationsprodukte nach konventioneller UV-Härtung (Stand der Technik) der Offset-Druckfarbe U 41 S Black (Fa. Zeller+Gmelin, Eislingen) im Vergleich mit Migrationsprodukten nach UVC-enhaned- und Elektronenstrahl-Härtung.

Für die UVC-enhanced-Härtung wurde eine photoinitiatorfreie Druckfarbe für Elektronenstrahl-härtung (ES-Offset) benutzt, der 0.6% des Photoinitiators IC 369 zugesetzt wurden, um eine verbesserte Tiefenhärtung und Haftung auf dem Bedruckstoff zu erreichen. Das Bindemittelsystem der ES-Druckfarbe entsprach dem der Druckfarbe U 41 S.

Mit einem Andruckgerät der Fa. IGT wurden jeweils Andrucke mit Vollton-Farbdichte ( Black = 1,8) auf Polyesterfolie hergestellt. Die Andrucke wurden bei Bahngeschwindigkeiten bis 150 m/min mit UVC-enhanced-Hg-Mitteldrucklampen einer elektrischen Gesamtleistung von 480 W/cm in einer Durchlauf-Reaktionskammer unter Stickstoff ausgehärtet.
Die Sauerstoff-Konzentration war üblicherweise kleiner als 50 ppm konnte aber bis 2000 ppm variiert werden. Die Druckmuster wurden alternativ mit 160 keV Elektronen bei einer Dosis von 30 kGy gehärtet.

Zur Untersuchung der Migrationsprodukte wurden 5 cm² eines Druckmusters 20 min bei 80°C über einer Absorberfaser ausgeheizt (SPME: solid phase mass extraction).

Die Absorberfaser wurde dann im GC entladen und das desorbierte Gemisch mit GCMS analysiert. Übliche Kohlenwasserstoff-Standards dienten zur Kalibrierung. Die Ergebnisse des SPME/GCMS -Untersuchungen wurden außerdem für eine ausgewählte Lackbeschichtung mit den Resultaten einer Migrationsuntersuchung verglichen, die von einem akkreditierten Analytiklabor durchgeführt wurde.

**Tabelle 2**

| **Photoinitiator-Produkt** | **Konzentration nach konventioneller UV-Härtung (GC counts) Offset-Druckfarbe mit 2% IC 369** | **Konzentration nach UVC-enhanced-Härtung (GC counts) ES-Offset-Druckfarbe mit 0.6% IC 369** | **Konzentration nach Elektronenstrahlhärtung mit 30 kGy (GC counts) ES-Offset-Druckfarbe ohne Photoinitiator** |
|---|---|---|---|
| 1-Phenyl-2-butanon | 500 000 | < 2500 | < 1000 |
| 1,3Dimethylbutyibenzen | 1 800 500 | < 1000 | <1000 |
| 4-Morpholin-4yl-benzaldehyd | 1 930 000 | < 7000 | <1000 |

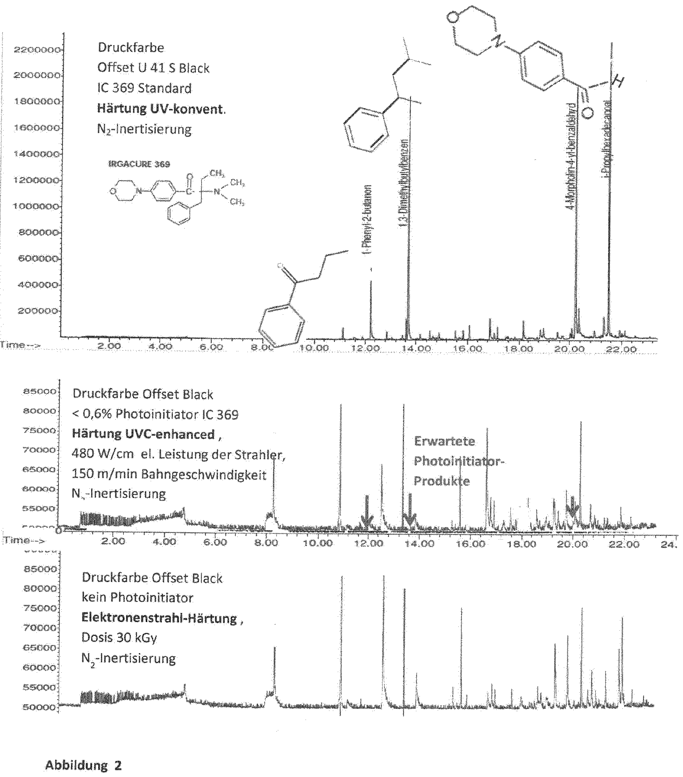

Die Ergebnisse der SPME/GCMS-Untersuchungen sind in Abbildung 2 dargestellt und in Tabelle 2 zusammengefasst.

Wie in Abbildung 2 oben dargestellt, sind nach konventioneller UV-Härtung die erwarteten Photolnltiator-Abbauprodukte sehr gut nachweisbar.

Im Gegensatz dazu werden im Bereich der entsprechenden Retentionszeiten für die UCV-enhanced-geharteten Drucke keine signifikanten Peaks gefunden. Die in Tabelle 2 aufgeführten Werte entsprechen in etwa dem Grundrauschen der GC-Kurven. Für die ES-gehärtet Druckfarbe werden erwartungsgemäß ähnlich geringe Werte der spezifischen Migration gefunden.

Ein qualitativer Vergleich der spezifischen Migration aller GC-Peaks bei UVC-enhanced- bzw. ES-Härtung zeigt im Überblick ähnliche Werte. Dabei könnten Unterschiede in den Amplituden auf den unterschiedlichen Mechanismus der Härtung zurückzuführen sein.

Ein Vergleich der in Abbildung 2 nach Elektronenstrahl- bzw. UVC-enhanced-Härtung gemessenen Migrationsprodukte mit Eichwerten zeigt, dass die spezifische Migration jedes signifikanten GC- Peaks unterhalb des spezifischen Migrationslimits von 10 ppb liegt.

**Beispiel 3:** Migrationsprodukte nach konventioneller UV-Härtung (Stand der Technik) einer UV-Flexo Druckfarbe Black im Vergleich mit Migrationsprodukten nach UVC-enhanced- (erfindungsgemäße Lösung) und Elektronenstrahl-Härtung.
Für die UVC-enhanced-Härtung wurde eine photoinitiatorfreie Flexo-Druckfarbe für Elektronenstrahl-Härtung benutzt, der 1% des Photoinitiators TPO zugesetzt wurden. Herstellung der Druckmuster, Härtung und analytische Charakterisierung erfolgten analog Beispiel 2.

**Tabelle 3**

| **Photoinitlat or-Produkt, Stabilisator** | **Konzentrati on nach konvention. UV-Härtung ( GC counts) UVFlexo-Druckfarbe mit 1% TPO** | **Konzentratio n nach UVC- enhanced-Härtung 50 m/min an Luft (GC counts) UV-Flexo-Druckfarbe mit 1% TPO** | **Konzentratio n nach UVC- enhanced-Härtung 100** m/min **Stickstoff (GC counts) UV-Flexo-Druckfarbe mit 1% TPO** | **Konzentratio n nach UVC- enhanced-Härtung 150 m/min Stickstoff (GC counts) UV-Flexo-Druckfarbe mit 1% TPO** | **Konzentration nach Elektronenstr ahl-härtung mit 30 kGy Stickstoff (GC counts) UV-Flexo-Druckfarbe ohne Photoinitiator** |
|---|---|---|---|---|---|
| Trimethylbenzen | 1 960 000 | < 25 000 | < 25 000 | < 50 000 | < 25 000 |
| Trimethylbenzoesäure | 1 500 000 | 400 000 | < 25 000 | <50 000 | < 25 000 |
| Butylhydroxy toluol (Stabilisator) | 860 000 | 800 000 | 200 000 | 1 200 000 | 1 050 000 |

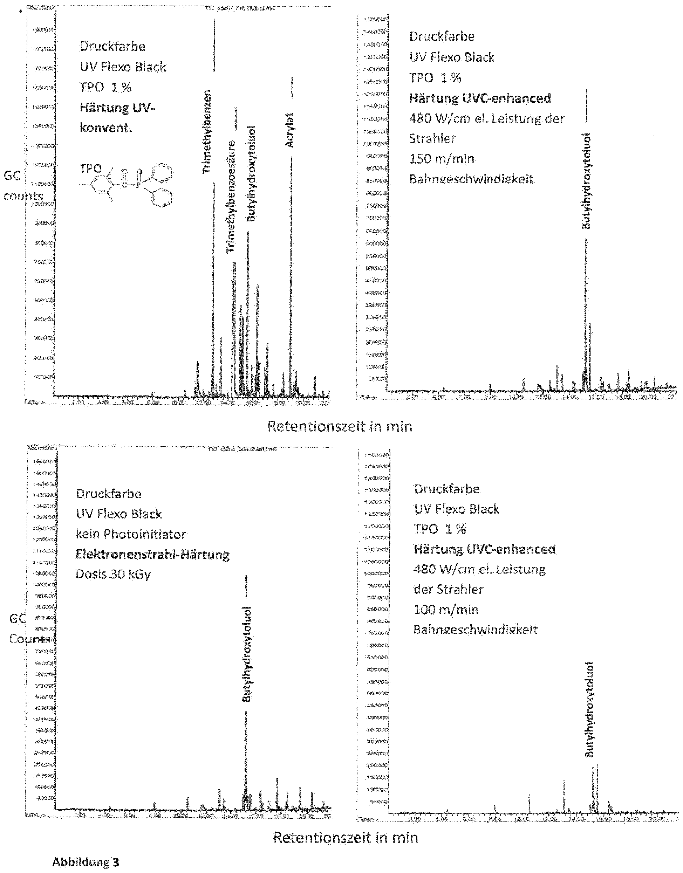

Wie in Abbildung 3 oben links dargestellt, sind nach konventioneller UV-Härtung der Druckfarbe die Photoinitiator- Abbauprodukte Trimethylbenzen und Trimethylbenzoesäure gut nachweisbar. Außerdem erscheinen Peaks, die Stabilisatoren (Butylhydroxytoluol) und nicht umgesetzten Acrylaten (Acrylat) zugeordnet werden.

Nach UVC-enhanced-Härtung bei 150 m/min Bahngeschwindigkeit (Abbildung 3 oben rechts) sind Photoinitiatorprodukte nicht mehr signifikant nachweisbar.
Die Konzentration migrierbarer Acrylate ist stark reduziert. Der Stabilisatorpeak bleibt signifikant. Der Stabilisator Butylhydroxytoluol wird unter der Bezeichnung E 321 als Antioxidans Lebensmitteln zugesetzt und gilt als "bewertete Substanz" im Sinne der "Verordnung (EU) 10/2011 über Materialien und Gegenstände aus Kunststoff, die dazu bestimmt sind, mit Lebensmitteln in Berührung zu kommen". Das spezifische Migrationslimit ist mit 3 mg/kg gelistet.

Wird bel UVC-enhanced-Härtung die Bahngeschwindigkeit auf 100 m/min verringert, was gegenüber 150 m/min einer entsprechenden Erhöhung der UV-Dosis entspricht, dann sind außer Artifakten um 8,0; 10,8 und 13,2 min kaum noch Peaks nachweisbar, die echten Migrationsprodukten entsprechen. Selbst der Stabilisator wird stark abgebaut (siehe Abbildung 3 unten rechts).

In der Summe sind hier weniger Peaks nachweisbar als in Druckmustern, die bei Dosen von 30 kGy mit Elektronen gehärtet wurden (siehe Abbildung 3 unten links). Migrierende Produkte und Stabilisatoranteile sind etwa vergleichbar für Druckmuster, die bei einer Dosis von 30 kGy mit Elektronen bzw. bei 150 m/min Bahngeschwindigkeit mit UV-enhanced-Hg-Mltteldruckstrahlern gehärtete wurden.

## Patentansprüche

1. Verfahren zur Verringerung der Konzentration migrierbarer Substanzen mit Molekulargewichten kleiner als 1000 Da aus UV-gehärteten Drucken und Beschichtungen, bei welchem im UV-Härtungsprozess erzeugte migrierbare Photoinitiator-Degradationsprodukte und nicht umgesetzte Photoinitiatoren in einer Sekundärreaktion durch Bestrahlung mit (UVC-enhanced-) Hg-Mitteldruckstrahlern, die eine stark erhöhte Emissionsintensität bei Wellenlängen < 230 nm aufweisen, abgebaut und die Reaktionsprodukte in das entstehende polymere Netzwerk chemisch eingebunden und damit gegen Migration immobilisiert werden.

2. Verfahren nach Anspruch 1, bei welchem als Photonenquellen zur Bestrahlung Quecksilber-Mltteldruckstrahler mit vorzugsweise um den Faktor 5 erhöhter Emissionsintensität im Wellenlängenbereich von 190 bis 230 nm verwendet werden.

3. Verfahren nach Anspruch 1, bei welchem die migrierbaren Photoinitiatorprodukte und nicht umgesetzten Photoinitiatoren In inerter Atmosphäre bei einem Rest-Sauerstoffgehalt unter 1000 ppm umgesetzt werden.

4. Verfahren nach Anspruch 1, bei welchem als Photoinitiatoren sogenannte Norrish Typ 1 Photoinitiatoren eingesetzt werden, die Radikalpaare durch den unlmolekularen Zerfall eines angeregten Molekülzustands (Triplet) bilden.

5. Verwendung von UVC-enhanced- Hg-Mitteldruckstrahlern zur Bestrahlung im UV-Härtungsprozess erzeugten migrierbaren Photoinitiator- Degradationsprodukten und nicht umgesetzten Photoinitiatoren zur Verringerung der Konzentration migrierbarer Substanzen mit Molekulargewichten kleiner als 1000 Da aus UV-gehärteten Drucken und Beschichtungen.

## Claims

1. A method for reducing the concentration of migratable substances with molecular weights below 1000 Da in UV-cured prints and coatings, in which migratable photoinltlator degradation products produced in the UV curing process and unreacted photoinitiators are decomposed in a secondary reaction through irradiation with (UVC-enhanced) medium-pressure Hg lamps, which have a greatly increased emission intensity at wavelengths < 230 nm, and the reaction products are chemically bound in the resulting polymer network and thus immobilized against migration.

2. A method according to claim 1, in which medium-pressure mercury lamps are used as photon sources for irradiation, preferably with an emission intensity increased by a factor of 5 in the wavelength range from 190 to 230 nm.

3. A method according to claim 1, in which the migratable photoinitiator products and unreacted photoinitiators are decomposed in an inert atmosphere with a residual oxygen level below 1000 ppm.

4. A method according to claim 1, in which so-called Norrish type I photoinitiators, which form radical pairs through the unimolecular decay of an excited molecular state (triplet), are used as photoinitiators.

5. The use of UVC-enhanced medium-pressure Hg lamps for the irradiation of migratable photoinitiator degradation products and unreacted photoinitiators produced in the UV curing process to reduce the concentration of migratable substances with molecular weights less than 1000 Da In UV-cured prints and coatings.

## Revendications

1. Procédé de réduction de la concentration de substances susceptibles de migrer avec des poids moléculaires Inférieurs à 1000 Da à partir d'impressions et de revêtements durcis aux UV, dans lequel des produits de décomposition de photo-initiateurs susceptibles de migrer générés lors du processus de durcissement aux UV et des photo-initiateurs n'ayant pas réagi dans une réaction secondaire par irradiation avec des lampes à moyenne pression Hg (UVC renforcées), qui présentent une Intensité d'émission fortement augmentée à des longueurs d'onde < 230 nm, sont décomposés et les produits de réaction sont chimiquement liés dans le réseau polymère en résultant et ainsi Immobilisés contre la migration.

2. Procédé selon la revendication 1, dans lequel sont utilisés des lampes à moyenne pression au mercure comme sources de photons pour l'Irradiation avec de preference une Intensité d'émission augmentée du facteur 5 dans un intervalle de longueur d'onde entre 190 et 230 nm.

3. Procédé selon la revendication 1, dans lequel ont réagi les produits initiateurs de photons susceptibles de migrer et des photo-initiateurs n'ayant pas réagi dans une atmosphère inerte avec une teneur en oxygène résiduelle inférieure à 1000 ppm.

4. Procédé selon la revendication 1, dans lequel sont utilisés comme photo-initiateurs les photo-initiateurs de type 1 Norrish, qui forment des paires radicales par la décomposition monomoléculaire d'un état moléculaire excité (triplet).

5. Utilisation de lampes à moyenne pression Hg - UVC renforcées - pour l'irradiation de produits de décomposition de photo-initiateurs susceptibles de migrer générés dans un procédé de durcissement aux UV et de photo-initiateurs n'ayant pas réagi pour diminuer la concentration des substances susceptibles de migrer avec des poids moléculaires inférieurs à 1000 Da à partir d'impressions et de revêtements durcis aux UV.
